# EUROPEAN PATENT APPLICATION

(11) **EP 1 926 228 A2**
(43) Date of publication of application: **28.05.2008**
(21) Application number: 07022282.3
(22) Date of filing: 16.11.2007
(51) Int. Cl.: H04B 7/04, H04Q 7/30

(54) **Duplex supporting apparatus and method of base station system using multi-antenna**

(30) Priority: 21.11.2006 KR 20060115001
(71) Applicant: Samsung Electronics Co., Ltd., Suwon-si, Gyeonggi-Do (KR)
(72) Inventor: Oh, Hyo-Seon, Hwaseong-si Gyeonggi-do (KR); Park, Seong-Yong, Seongnam-si Gyeonggi-do (KR)
(74) Representative: Boakes, Jason Carrington

(57) **Abstract**

Duplex supporting apparatus and method in a base station sys tem which supports a multi-antenna are provided. The duplex supp orting apparatus in a base station system which supports K(≥1)-ar y sectors and M(≥1)-ary antennas per sector, includes a plurality of channel cards for generating M-ary data to be sent to the M-a ry antennas, exchanging part of the M-ary data with other channel cards, constituting a frame with part of the M-ary data and data received from the other channel cards, and providing the generat ed frame to a corresponding Radio Frequency (RF) module; and a pl urality of RF modules for extracting the M-ary data from a frame of a corresponding channel card among the channel cards, RF-proce ssing the extracted M-ary data, and feeding the processed data to original sectors/antennas.

## Description

### CROSS-REFERENCE TO RELATED APPLICATION AND CLAIM OF PRIORITY

The present application claims the benefit under 35 U.S.C. §119(a) of a Korean Patent Application filed in the Korean Intellectual Property Office on November 21, 2006 and assigned Serial No. 2006-115001, the entire disclosure of which is hereby incorporated by reference.

### TECHNICAL FIELD OF THE INVENTION

The present invention relates generally to a base station and an operation method of the base station in a wireless communication system, and in particular, to an apparatus and method for supporting a duplex without using an extra module in a base station using a multi-sector and a multi-antenna.

### BACKGROUNG OF THE INVENTION

**A** conventional base station generally has a structure of 1Tx/1Rx radio frequency (RF) path, or 1Tx/2Rx or 1Tx/4Rx RF paths per sector for the reception performance enhancement. However, as a base station widely employs a multi-antenna, such as Multiple Input-Multiple Output (MIMO) or beamforming in a Time Division Duplex (TDD) system, the base station is advancing to the structure of 2Tx/2Rx or 4Tx/4Rx or more RF paths per sector.

Typically, the base station duplexes an RF module to raise the reliability.

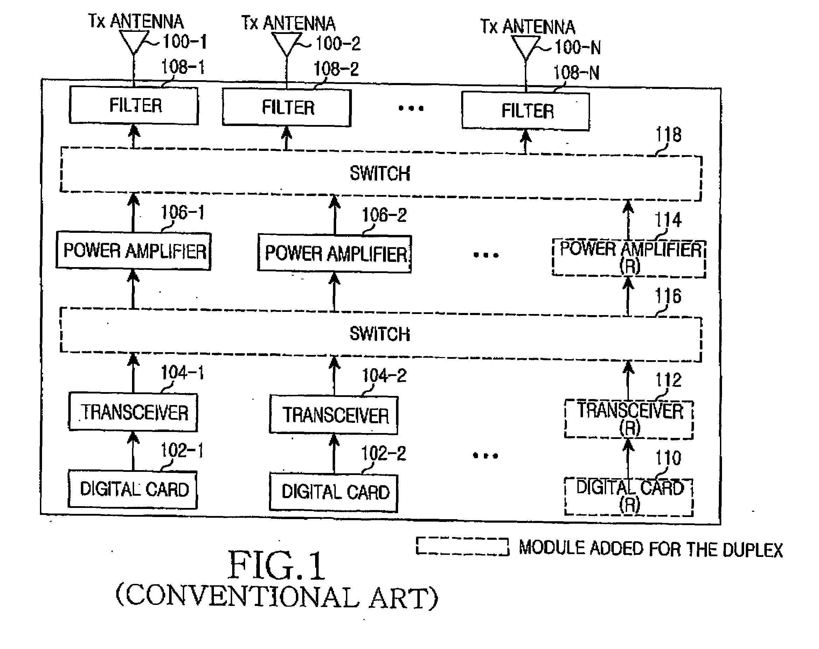

FIGURE 1 illustrates a duplex structure of a general multi-antenna system.

As shown in FIGURE 1, a plurality of transmit (Tx) paths is provided to support the multi-antenna. A first antenna signal passes through a digital card 102-1, a transceiver 104-1, a power amplifier 106-1, and a filter 108-1, and then transmitted over a first transmit (Tx) antenna 100-1. That is, the N-th antenna signal passes through the digital card 102-N, the transceiver 104-N, the power amplifier 106-N, and the filter 108-N, and then transmitted over the N-th Tx antenna 100-N.

A digital card 110, a transceiver 112, and a power amplifier 114 are modules added for the duplex. When error occurs in one of the N paths, the signal of the error path can be processed through the modules added for the duplex. For example, when an error occurs in the power amplifier 106-1, the signal processed at the transceiver 104-1 is fed to the redundant power amplifier 114 according to the operation of a switch 116. The signal processed at the power amplifier 114 is fed to the filter 108-1 according to the switching operation of a switch 118, and the signal processed at the filter 108-1 is transmitted over the first Tx antenna 100-1.

However, since the extra modules 110, 112, and 114 and the switch modules 116 and 118 are additionally provided for the duplex, the structure of FIGURE 1 aggravates the system complexity and raises the cost. In addition, the multi-antenna system includes two or more receive (Rx) paths and transmit (Tx) paths per sector. When the duplex structure is adopted to the multi-antenna system, the complexity is far more aggravated. To mitigate the complexity, an integrated RF module combining the transceiver, the power amplifier, and the filter into a single module is being used.

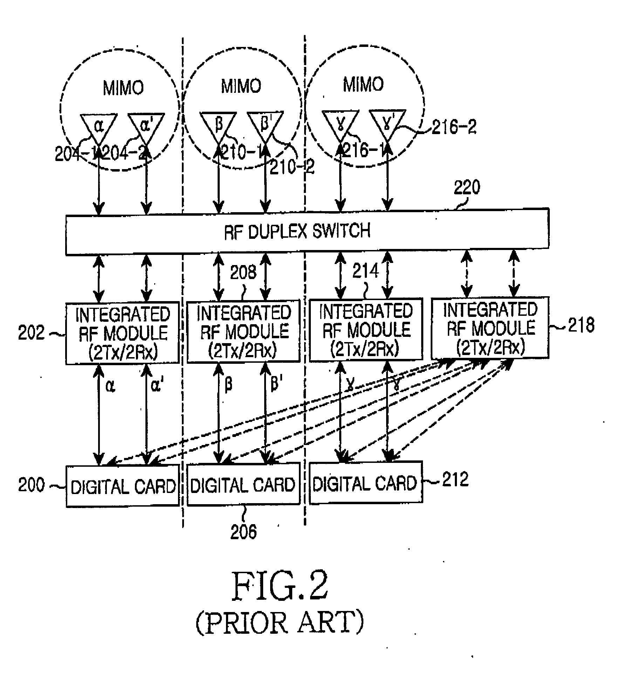

FIGURE 2 illustrates a duplex structure of a 3-sector 2x2 multi-antenna system.

Two paths per sector are established to support the multi-antenna in FIGURE 2. Signals processed at a digital card 200 and an integrated RF module 202 are transmitted over first sector antennas 204-1 and 204-2. Signals processed at a digital card 206 and an integrated RF module 208 are transmitted over second sector antennas 210-1 and 210-2. Signals processed at a digital card 212 and an integrated RF module 214 are transmitted over third sector antennas 216-1 and 216-2.

An extra integrated RF module 218, which is added for the duplex, can process a signal of the corresponding path when error occurs in one of the basic modules. For example, when error occurs in the integrated RF module 208 for the second sector, signals processed at the digital card 206 are fed to the integrated RF module 218. The signals processed at the integrated RF module 218 are fed to the second sector antennas 210-1 and 210-2 according to the switching operation of a duplex switch 220.

However, since the base station employing the integrated RF module of FIGURE 2 additionally requires the extra duplex module 218 and the switch module 210 for the sake of the duplex, the system complexity is still aggravated and the cost is increased.

### SUMMARY OF THE INVENTION

To address the above-discussed deficiencies of the prior art, it is a primary object of the present invention to substantially solve at least the above problems and/or disadvantages and to provide at least the advantages below. Accordingly, an aspect of the present invention is to provide an apparatus and method for supporting the duplex without extra modules in a base station using a multi-antenna.

Another aspect of the present invention is to provide an apparatus and method for constantly maintaining service in every sector even when a module error occurs to a specific sector in a base station using a multi-antenna.

A further aspect of the present invention is to provide an apparatus and method for processing signals of different sectors using a single RF module in a base station using a multi-antenna.

The above aspects are achieved by providing a duplex supporting apparatus in a base station system which supports K sectors and M antennas per sector, which includes a plurality of channel cards for generating M data to be sent to the M antennas, exchanging part of the M data with other channel cards, constituting a frame with part of the M-ary data and data received from the other channel cards, and providing the constituted frame to a corresponding radio frequency (RF) module; and a plurality of RF modules for extracting the M data from a frame of a corresponding channel card among the channel cards, RF-processing the extracted M data, and feeding the processed RF signals to original sectors/antennas.

According to one aspect of the present invention, a duplex supporting method in a base station system which supports K sectors and M antennas per sector, includes generating, at a channel card, M data to be sent to the M antennas; exchanging part of the M data with other channel cards; formatting a frame with part of the M data and data received from the other channel cards; providing the formatted frame to a corresponding radio frequency (RF) module; extracting, at the RF module, the Mdata from a frame of a corresponding channel card among the channel cards; and RF-processing the extracted M data and feeding the processed RF signals to original sectors/antennas.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a duplex structure of a general multi-antenna system;

FIGURE 2 illustrates a duplex structure of a 3-sector 2x2 multi-antenna system;

FIGURE 3 illustrates a base station system using two multi-antennas per sector according to the present invention;

FIGURE 4 illustrates a base station system using four multi-antennas per sector according to the present invention;

FIGURE 5 illustrates a channel card in detail according to the present invention;

FIGURE 6 illustrates a base station system using N multi-antennas per sector according to the present invention; and

FIGURE 7 illustrates a method for processing error in the base station using the multi-sector and the multi-antenna according to the present invention.

### DETAILED DESCRIPTION OF THE INVENTION

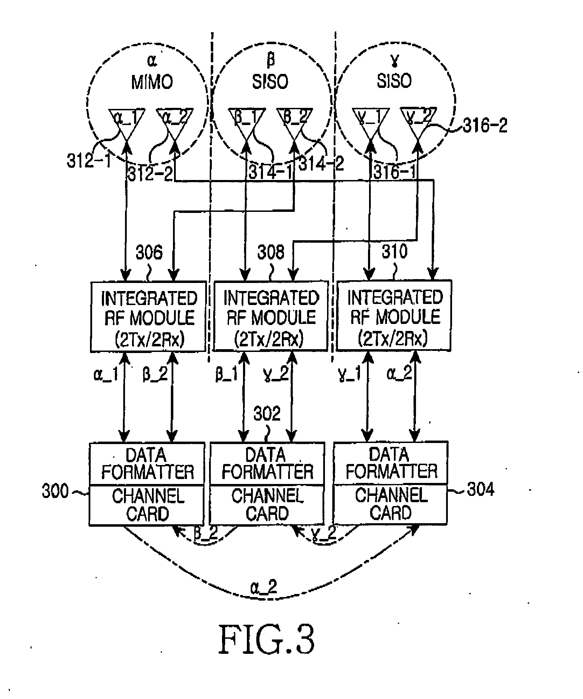

FIGURES 3 through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

Preferred embodiments of the present invention will be described herein below with reference to the accompanying drawings. In the following description, well-known functions or constructions are not described in detail since they would obscure the invention in unnecessary detail.

The present invention provides a method for supporting the duplex without an extra module in a base station system which supports a multi-sector and a multi-antenna. That is, the present invention provides a method for constantly maintaining service in every sector even when module error occurs to a specific sector.

FIGURE 3 illustrates a base station system using two multi-antennas per sector according to the present invention.

The base station system of FIGURE 3 includes three channel cards 300, 302 and 304, three radio frequency (RF) modules 306, 308 and 310, and two antennas per sector to support three sectors. To assist in understanding the described embodiment, a signal transmission is described. It should be appreciated that a received signal is processed by reversing the transmission path.

The first channel card 300 codes and modulates data to be transmitted to a first sector α, and generates first antenna data α_1 and second antenna data α_2 by multi-antenna signal processing. The first channel card 300 outputs the second antenna data α_2 to the third channel card 304 and receives second antenna data β_2 from the second channel card 302. Next, the first channel card 300 formats a frame with the first sector/the first antenna data α_1 and the second sector/the second antenna data β_2 according to a certain frame standard and outputs the formatted frame to the first RF module 306. Herein, the frame standard is an interface standard defined between the channel card and the RF module. For example, the frame standard includes Common Public Radio Interface (CPRI) and Open Base Station Architecture Initiative (OBSAI).

The first RF module 306 converts the first sector/the first antenna data α_1 fed from the channel card 300 to a RF signal and outputs the RF signal to the first antenna 312-1 of the first sector. The first RF module 306 converts the second sector/the second antenna data β_2 fed from the channel card 300 to a RF signal and outputs the RF signal to the second antenna 314-2 of the second sector.

The second channel card 302 formats a frame with second sector/first antenna data β_1 and third sector/second antenna data γ_2 according to a certain frame standard and outputs the formatted frame to the second RF module 308. The second RF module 308 converts the two input data to RF signals and feeds the converted RF signals to the respective antennas. One of the converted signals is fed to the first antenna 314-1 of the second sector and the other signal is fed to the second antenna 316-2 of the third sector.

Likewise, the third channel card 304 formats a frame with third sector/first antenna data γ_1 and first sector/second antenna data α_2 according to a certain frame standard and outputs them to the third RF module 310. The third RF module 310 converts the two input data to RF signals and provides the converted RF signals to the respective antennas. One of the converted signals is fed to the first antenna 316-1 of the third sector and the other signal is fed to the second antenna 312-2 of the first sector.

As such, the channel card formats a frame with its generated data and the data fed from the other channel card and provides the formatted frame to the corresponding RF module, and the RF module RF-processes the data of the different sectors. The RF module provides one of the RF-processed signals to the antenna of its sector and the other signal to the antenna of the other sector. When the RF module processes the data of the different sectors and provides the processed data to the original antennas, it is possible to prevent an out-of-service condition in a specific sector because of the error occurring in the specific RF module.

When the error occurs to the second RF module 308, the second sector and the third sector operate only one antenna and accordingly operate in a Single Input Single Output (SISO) mode. In specific, the second antenna 314-2 of the second sector, which receives the signal from the first RF module 306, can keep servicing. The second antenna 316-2 of the third sector is out of service because of the error of the second RF module 308, whereas the first antenna 316-1 keeps servicing because it receives the signal from the third RF module 310. In the SISO mode, at the sacrifice of the gain of the multi-antenna, the out-of-service condition of the specific sector can be avoided.

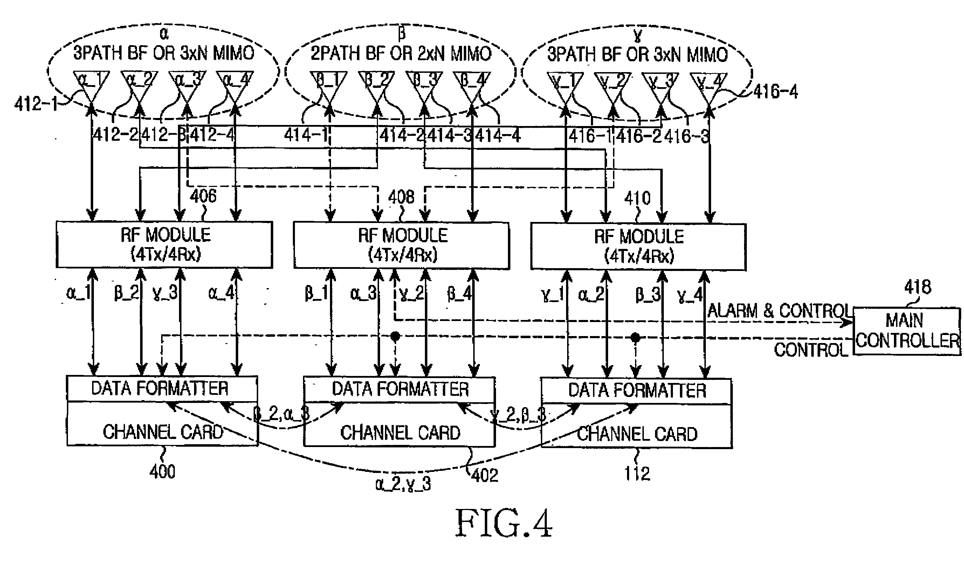

FIGURE 4 illustrates a base station system using four multi-antennas per sector according to the present invention.

The base station system of FIGURE 4 includes three channel cards 400, 402 and 404, three RF modules 406, 408 and 410, and four antennas per sector, to support three sectors. To facilitate understanding, a signal transmission is described. Note that a received signal is processed by reversing the transmission path.

The first channel card 400 codes and modulates data to be transmitted to the first sector α, and generates first antenna data α_1 through fourth antenna data α_4 by multi-antenna signal processing. The first channel card 400 outputs the second antenna data α_2 to the third channel card 404 and receives second antenna data β_2 from the second channel card 402. Next, the first channel card 400 formats a frame with the first sector/the first antenna data α_1, the second sector/the second antenna data β_2, the third sector/the third antenna data γ_3, and the first sector/the fourth antenna data α_4 according to a certain frame standard and outputs the formatted frame to the first RF module 406. Herein, the frame standard is an interface standard defined between the channel card and the RF module. For example, the frame standard includes CPRI and OBSAI.

The first RF module 406 converts the first sector/the first antenna data α_1 fed from the channel card 400 to a RF signal and provides the RF signal to the first antenna 412-1 of the first sector. The first RF module 406 converts the second sector/the second antenna data β_2 fed from the channel card 400 to a RF signal and provides the RF signal to the second antenna 414-2 of the second sector. The first RF module 406 converts the third sector/the third antenna data γ_3 fed from the channel card 400 to a RF signal and provides the RF signal to the third antenna 416-3 of the third sector. The first RF module 406 converts the first sector/the fourth antenna data α_4 fed from the channel card 400 to a RF signal and provides the RF signal to the fourth antenna 412-4 of the first sector.

The second channel card 402 formats a frame with the second sector/the first antenna data β_1, the first sector/the third antenna data α_3, the third sector/the second antenna data γ_3, and the second sector/the fourth antenna data β_4 according to a certain frame standard and outputs the formatted data to the second RF module 408. The second RF module 408 converts the four fed data to RF signals and provides the converted RF signals to the respective antennas. In specific, the first signal of the converted signals is fed to the first antenna 414-1 of the second sector, the second signal is fed to the third antenna 412-3 of the first sector, the third signal is fed to the second antenna 416-2 of the third sector, and the fourth signal is fed to the fourth antenna 414-4 of the second sector.

Likewise, the third channel card 404 formats a frame with the third sector/the first antenna data γ_1, the first sector/the second antenna data α_2, the second sector/the third antenna data β_3, and the third sector/the fourth antenna data γ_4 according to a certain frame standard and outputs the formatted data to the third RF module 410. The third RF module 410 converts the four fed data to RF signals and provides the converted RF signals to the respective antennas. Among the converted signals, the first signal is fed to the first antenna 416-1 of the third sector, the second signal is fed to the second antenna 412-2 of the first sector, the third signal is fed to the third antenna 414-3 of the second sector, and the fourth signal is fed to the fourth antenna 416-4 of the third sector.

As above, the channel card formats a frame with its generated data and the data input from the other channel card and provides the formatted data to the corresponding RF module, and the RF module RF-processes the input data of the different sectors. The RF module provides part of the RF-processed signals to the antenna of its sector and provides the remaining signals to the antennas of the other sectors. When the RF module processes the data of the different sectors and provides the processed data to the original antennas respectively, it is possible to prevent a specific sector from being out of service because of the error of a specific RF module.

A main controller 418 determines whether error occurs by collecting alarms from the RF modules 406 through 410, and selects a channel card which needs to change its mode when a specific RF module has the error. The main controller 418 operates to maintain a normal service in every sector by requesting the mode change to the selected channel cards.

When the error occurs to the second RF module 408 as shown in FIGURE 4, the third antenna 412-3 of the first sector, the first antenna 414-1 and the fourth antenna 414-4 of the second sector, and the second antenna 416-2 of the third sector cannot be serviced. Hence, the main controller 418 requests the mode change to the channel cards 400, 402 and 404. For example, since the first sector and the third sector can be serviced using three antennas, the main controller 418 requests a multi-antenna mode which operates using three antennas, to the first and third channel cards 400 and 404. Since the second sector can be serviced using two antennas, the main controller 418 requests a multi-antenna mode which operates using two antennas to the second channel card 402. Upon receiving the mode change request, the channel cards 400, 402 and 404 enter the multi-antenna mode and process the baseband signal according to their changed modes.

Thus, when the error occurs to the specific RF module, the number of the antennas serviceable in the sectors reduces, whereas an out-of-service condition of the specific sector can be avoided.

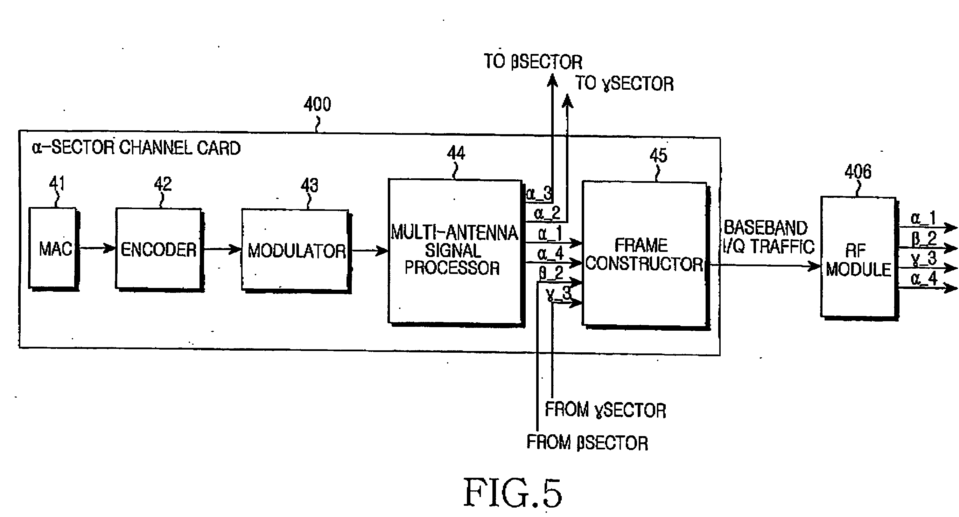

FIGURE 5 illustrates the channel card in detail according to the present invention.

Since the channel cards 400, 402 and 404 of FIGURE 4 have the same structure, merely the first channel card 400 is explained for example. To assist in understanding the disclosed embodiment, the signal transmission is described.

The channel card 400 of FIGURE 5 includes a media access control (MAC) layer part 41, an encoder 42, a modulator 43, a multi-antenna signal processor 44, and a frame constructor(or frame formatter) 45.

The MAC layer part 41 generates and outputs transmit data. The encoder 42 generates coded symbols by encoding the data provided from the MAC layer part 41. For example, the encoder 42 can employ an encoder using convolutional code (CC), an encoder using a block turbo code (BTC), and an encoder using a convolutional turbo code (CTC) .

The modulator 43 generates modulated symbols by modulating the coded symbols fed from the encoder 42 using a certain modulation scheme. For example, the modulator 42 can adopt a modulation scheme such as quadrature phase shift keying (QPSK), 16 quadrature amplitude modulation (16 QAM), and 32 QAM.

The multi-antenna signal processor 44 determines the multi-antenna mode according to the request of the main controller 418, and generates a plurality of antenna data by processing the data fed from the modulator 43 in the determined multi-antenna mode. When the system of FIGURE 4 normally operates, the multi-antenna signal processor 44 generates four antenna data α_1 through α_4, The first sector/the third antenna data α_3 is provided to the channel card 402 of the second sector, the first sector/the second antenna data α_2 is provided to the channel card 404 of the third sector. The first sector/the first antenna data α_1 and the first sector/the fourth antenna data α_4 are provided to the frame structure 45.

The frame constructor 45 formats a frame with the two data α_1 and α_4 fed from the multi-antenna signal processor 45 and the two other data β_2 and γ_3 fed from the other channel cards 402 and 404 according to the certain frame standard, and outputs the formatted data to the second RF module 406.

The RF module 406 extracts four data α_1, α_4, β_2 and γ_3 by decomposing the frame from the frame constructor 45 and converts the four data to RF signals. The first signal α_1 is fed to the first antenna 412-1 of the first sector, the second signal β_2 is fed to the second antenna 414-2 of the second sector, the third signal γ_3 is fed to the third antenna 416-3 of the third sector, and the fourth signal α_4 is fed to the fourth antenna 412-4 of the first sector.

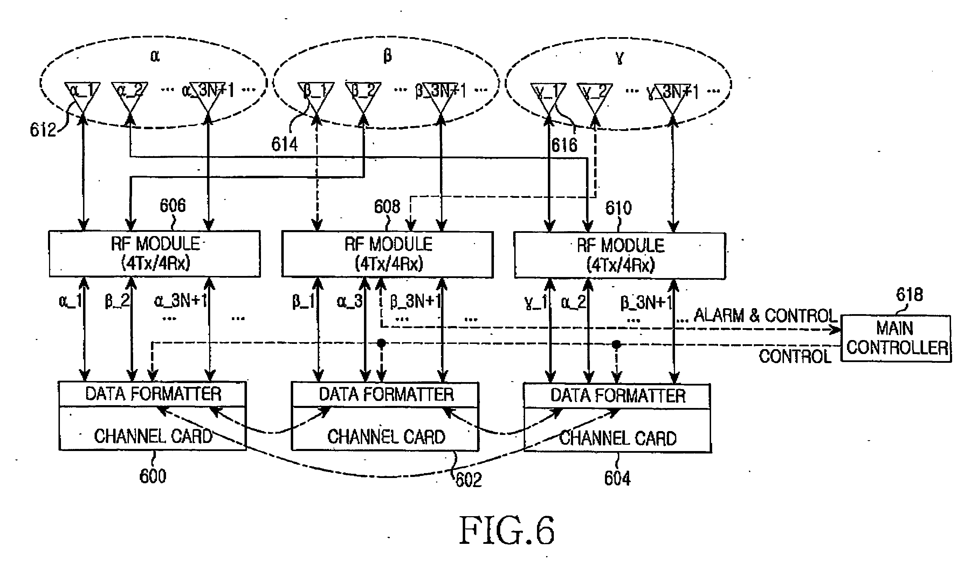

FIGURE 6 illustrates a base station system using N multi-antennas per sector according to the present invention.

The base station system of FIGURE 6 includes three channel cards 600, 602 and 604, three RF modules 606, 608 and 610, and N antennas per sector, to support three sectors. Note that FIGURE 6 shows the generalized concept of the present invention. Since the base station system of FIGURE 6 operates the same as in FIGURES 3 and 4, its further description shall be omitted.

To assist in understanding the disclosed embodiment, the data exchange rule between the channel cards is explained.

Table 1 arranges the data exchange rule in the system of FIGURE 3.

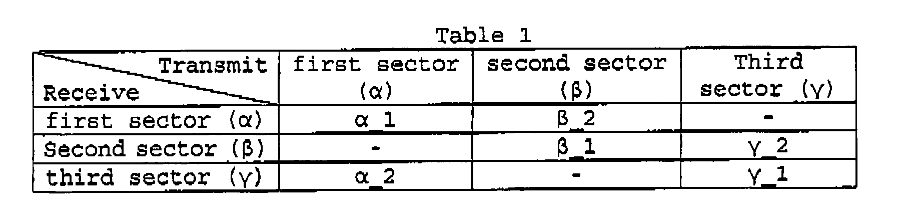

As shown in Table 1, the channel card 300 of the first sector formats a frame with the first sector/the first antenna data α_1 and the second sector/the second antenna data β_2 and provides the formatted frame to the RF module 306. The channel card 302 of the second sector constitutes a frame with the second sector/the first antenna data β_1 and the third sector/the second antenna data γ_2 and provides the constituted frame to the RF module 308. The channel card 304 of the third sector constitutes a frame with the first sector/the second antenna data α_2 and the third sector/the first antenna data γ_1 and provides the constituted d frame to the RF module 310.

Table 2 shows the data change rule in the system of FIGURE 4.

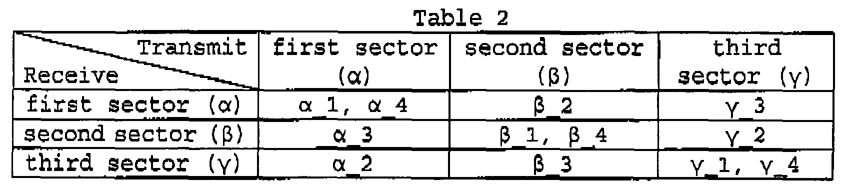

For example, the channel card 400 of the first sector constitutes a frame with the first sector/the first antenna data α_1, the first sector/the fourth antenna data α_4, the second sector/the second antenna data β_2, and the third sector/the third antenna data γ_3, and provides the generated frame to the RF module 406.

Table 3 shows the data exchange rule in the system of FIGURE 6.

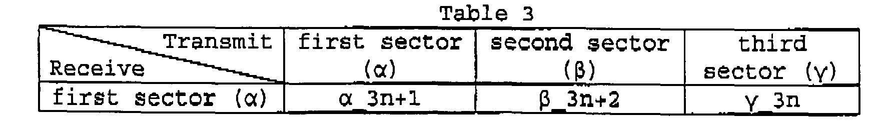

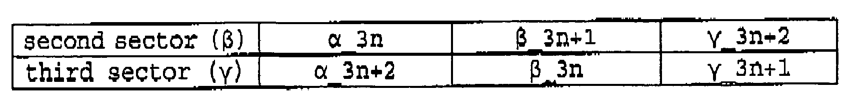

The value of n ranges from 0 ≤ n ≤ the quotient of M/3, and M is the number of antennas.

As shown in Table 3, the channel card 600 of the first sector constitutes a frame with the first sector/the (3n+1) -th antenna data α_3n+1, the second sector/the (3n+2)-th antenna data β_3n+2, and the third sector/the 3n-th antenna data γ_3n, and provides the generated frame to the RF module 606. The channel card 602 of the second sector constitutes a frame with the first sector/the 3n-th antenna data α_3n, the second sector/the (3n+1)-th antenna data β_3n+1, and the third sector/the (3n+2)-th antenna data γ_3n+2, and provides the generated frame to the RF module 608. The channel card 604 of the third sector constitutes a frame with the first sector/the (3n+2)-th antenna data α_3n+2, the second sector/the 3n-th antenna data β_3n, and the third sector/the (3n+1)-th antenna data γ_3n+1, and provides the generated frame to the RF module 610. The RF modules RF-process the fed data and feed the RF-processed signals to the respective sectors/antennas.

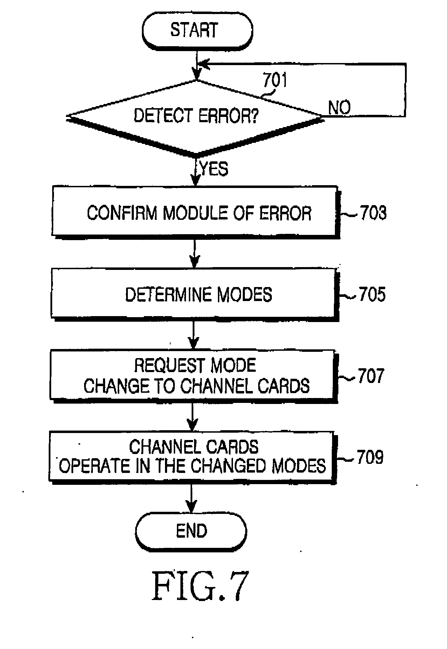

FIGURE 7 illustrates a method for processing error in the base station using the multi-sector and the multi-antenna according to the present invention.

In step 701, the base station detects the error. The main controller 418 of FIGURE 4 determines the error by monitoring the alarms from the RF modules 406, 408 and 410.

Upon detecting the error, the base station confirms the RF module of the error in step 703. In step 705, the base station determines the modes serviceable in the sectors. As mentioned above, when the error occurs to a certain RF module, the number of the serviceable antennas per sector is reduced. Thus, the base station determines the multi-antenna mode by taking into account the number of the serviceable antennas for the sectors. If only one antenna is serviceable, the corresponding sector should enter the SISO mode.

When the modes for the sectors are determined, the base station changes the mode of the channel cards in step 707 and operates the channel cards in the changed modes in step 709. Therefore, when the error occurs, the modes are properly changed by taking into account the number of the serviceable antennas in the sectors, to thus achieve the seamless service in every sector.

As set forth above, in the base station supporting the multi-sector and the multi-antenna, the integrated RF module constituted per sector processes two or more signals of the different sectors. Thus, even when an error occurs in a certain RF module, at least one path per sector can be serviced. That is, even when an error occurs in a certain RF module, the seamless service can be provided in every sector. As a result, the service reliability can be enhanced without employing extra RF modules. Further, by realizing the duplex without the extra modules, the system complexity and the cost increase can be addressed.

Although the present disclosure has been described with an exemplary embodiment, various changes and modifications may be suggested to one skilled in the art. It is intended that the present disclosure encompass such changes and modifications as fall within the scope of the appended claims.

## Claims

1. A duplex supporting apparatus in a base station system which supports K sectors and M antennas per sector, where K and M are greater than or equal to 1, the apparatus comprising:
a plurality of channel cards for generating M data to be sent to the M antennas, exchanging part of the M data with other channel cards, constituting a frame with part of the M data and data received from the other channel cards, and providing the constituted frame to a corresponding Radio Frequency (RF) module; and
a plurality of RF modules for extracting the M data from a frame of a corresponding channel card among the channel cards, RF-processing the extracted M data, and feeding the processed RF signals to original sectors/antennas.

2. The duplex supporting apparatus of claim 1, wherein the M antennas constituted in each of the K sectors transmit signals processed at the different RF modules.

3. The duplex supporting apparatus of claim 1, further comprising:
a controller for detecting error of the RF modules, changing to a multi-antenna mode by taking into account a number of serviceable antennas for each channel cards when the error is detected, and requesting the changed mode to the channel cards.

4. The duplex supporting apparatus of claim 1, wherein the frame conforms to Common Public Radio Interface (CPRI) or Open Base Station Architecture Initiative (OBSAI).

5. The duplex supporting apparatus of claim 1, wherein, when three sectors and two multi-antennas per sector are provided, the first channel card constitutes the frame with first sector/first antenna data and second sector/second antenna data, the second channel card constitutes the frame with second sector/first antenna data and third sector/second antenna data, and the third channel card constitutes the frame with third sector/first antenna data and first sector/second antenna data.

6. The duplex supporting apparatus of claim 1, wherein, when three sectors and four multi-antennas per sector are provided, the first channel card constitutes the frame with first sector/first antenna data, second sector/second antenna data, third sector/third antenna data, and first sector/fourth antenna data,
the second channel card constitutes the frame with second sector/first antenna data, first sector/third antenna data, third sector/second antenna data, and second sector/fourth antenna data, and
the third channel card constitutes the frame with third sector/first antenna data, first sector/second antenna data, second sector/third antenna data, and third sector/fourth antenna data.

7. The duplex supporting apparatus of claim 1, wherein, when three sectors and M multi-antennas per sector are provided, a certain channel card constitutes the frame with data serviced to (3n+1)-th antennas of a sector of the channel card, where 0 ≤ n ≤ the quotient of M/3, data serviced to 3n-th antennas of a first other sector, and data serviced to (3n+2)-th antennas of a second other sector.

8. The duplex supporting apparatus of claim 1, wherein the RF modules each process M RF signals received from the different sectors to baseband data and provide the baseband data to the corresponding channel cards.

9. The duplex supporting apparatus of claim 8, wherein the channel cards each process only data of the sectors of the channel cards, among the M data input from the corresponding RF modules, and provide the other data to the original channel cards by distinguishing the sectors of the other data.

10. The duplex supporting apparatus of claim 1, wherein the RF module supports a multi-path and is an integrated module which combines at least one of a transceiver, a power amplifier, and a filter.

11. A duplex supporting method in a base station system which supports K sectors and M antennas per sector, where K and M are greater than or equal to 1, the method comprising:
generating, at a channel card, M data to be sent to the M antennas;
exchanging part of the M data with other channel cards;
formatting a frame with part of the M data and data received from the other channel cards;
providing the formatted frame to a corresponding Radio Frequency (RF) module;
extracting, at the RF modules, the M data from a frame of a corresponding channel card among the channel cards; and
RF-processing the extracted M data and feeding the processed RF signals to at least one of an original sector and an original antenna.

12. The duplex supporting method of claim 11, wherein the M antennas constituted in each of the K sectors transmit signals processed at the different RF modules.

13. The duplex supporting method of claim 11, further comprising:
detecting error of the RF modules; and
when the error is detected, changing to a multi-antenna mode by taking into account a number of serviceable antennas for each channel cards.

14. The duplex supporting method of claim 11, wherein the frame conforms to Common Public Radio Interface (CPRI) or Open Base Station Architecture Initiative (OBSAI).

15. The duplex supporting method of claim 11, wherein, in the frame constituting operation, when three sectors and two multi-antennas per sector are provided, the first channel card constitutes the frame with first sector/first antenna data and second sector/second antenna data, the second channel card constitutes the frame with second sector/first antenna data and third sector/second antenna data, and the third channel card constitutes the frame with third sector/first antenna data and first sector/second antenna data.

16. The duplex supporting method of claim 11, wherein, in the frame constituting operation, when three sectors and four multi-antennas per sector are provided, the first channel card constitutes the frame with first sector/first antenna data, second sector/second antenna data, third sector/third antenna data, and first sector/fourth antenna data,
the second channel card constitutes the frame with second sector/first antenna data, first sector/third antenna data, third sector/second antenna data, and second sector/fourth antenna data, and
the third channel card constitutes the frame with third sector/first antenna data, first sector/second antenna data, second sector/third antenna data, and third sector/fourth antenna data.

17. The duplex supporting method of claim 11, wherein, in the frame constituting operation, when three sectors and M-ary multi-antennas per sector are provided, a certain channel card constitutes the frame with data serviced to (3n+1)-th antennas of a sector of the channel card, where 0 ≤ n ≤ the quotient of M/3, data serviced to 3n-th antennas of a first other sector, and data serviced to (3n+2)-th antennas of a second other sector.

18. The duplex supporting method of claim 11, further comprising:
processing, at the RF modules, M-ary RF signals received from the different sectors to baseband data and providing the baseband data to the corresponding channel cards.

19. The duplex supporting method of claim 18, further comprising:
processing, at the channel cards, only data of the sectors of the channel cards, among the M-ary data input from the corresponding RF modules, and providing the other data to the original channel cards by distinguishing the sectors of the other data.

20. The duplex supporting method of claim 11, wherein the RF module supports a multi-path and is an integrated module which combines at least one of a transceiver, a power amplifier, and a filter.
